# EUROPÄISCHE PATENTSCHRIFT

(11) **EP 3 637 312 B1**
(45) Veröffentlichungstag und Bekanntmachung des Hinweises auf die Patenterteilung: **16.04.2025**
(21) Anmeldenummer: 19200708.6
(22) Anmeldetag: 01.10.2019
(51) Int. Cl.: G06V 20/13, G06V 20/17

(54) **VERFAHREN ZUM ERKENNEN EINES ZIELOBJEKTS MITTELS EINER KAMERA**
METHOD FOR DETECTING A TARGET OBJECT BY MEANS OF A CAMERA
PROCÉDÉ DE DÉTECTION D'UN OBJET CIBLE AU MOYEN D'UNE CAMÉRA

(30) Priorität: 09.10.2018 DE 102018007990
(43) Veröffentlichungstag der Anmeldung: 15.04.2020
(73) Patentinhaber: Diehl Defence GmbH & Co. KG, 88662 ÜBERLINGEN (DE)
(72) Erfinder: Weyßer, Robert, 88630 Pfullendorf (DE); Haltebourg, Clemens, 88697 Bermatingen (DE); Staehr, Werner, 88690 Uhldingen (DE); Mack, Thomas, 88699 Altheim (DE)
(74) Vertreter: Diehl Patentabteilung

(56) Entgegenhaltungen:
- "Robot Vision", 1 March 2010, INTECH, ISBN: 978-953-30-7077-3, article FRANCISCO BONIN-FONT ET AL: "A Visual Navigation Strategy Based on Inverse Perspective Transformation", XP055648896, DOI: 10.5772/9309
- WARD SEAN ET AL: "Autonomous UAVs wildlife detection using thermal imaging, predictive navigation and computer vision", 2016 IEEE AEROSPACE CONFERENCE, IEEE, 5 March 2016 (2016-03-05), pages 1 - 8, XP032916460, DOI: 10.1109/AERO.2016.7500671
- ZHE JIANG ET AL: "Aerial video image object detection and tracing based on motion vector compensation and statistic analysis", MICROELECTRONICS&ELECTRONICS, 2009. PRIMEASIA 2009. ASIA PACIFIC CONFERENCE ON POSTGRADUATE RESEARCH IN, IEEE, PISCATAWAY, NJ, USA, 19 January 2009 (2009-01-19), pages 302 - 305, XP031617912, ISBN: 978-1-4244-4668-1

## Beschreibung

Die Erfindung betrifft ein Verfahren zum Erkennen eines Zielobjekts mittels einer Kamera, bei dem die Kamera mehrere Bilder aufnimmt und aus zumindest einem der Bilder ein Objekt als potenzielles Zielobjekt bestimmt wird.

Fahrzeuge zu Wasser, über Land und in der Luft werden während ihres Betriebs mit Infrarotkameras in der Regel zuverlässig anhand ihrer Wärmesignatur erkannt. Während dies bei kalter und reflexionsarmer Umgebung in der Regel tendentiell einfach ist, können umgebende Landflächen mit geringen Temperaturkontrasten oder auch Sonnenlichtreflexionen auf Eisflächen, wie einem Gletscher, Wärmesignaturen in einem IR-Bild erzeugen, die als Zielobjekte missdeutet werden können. Ein Fahrzeug in einem signaturreichen IR-Bild mittels bildverarbeitender Methoden zu finden, kann eine anspruchsvolle Aufgabe darstellen.

Aus "Francisco Bonin-Font, et al., 'A Visual Navigation Strategy Based on Inverse Perspective Transformation', in 'Robot Vision', 1. März 2010" ist Hinderniserkennung, basierend auf einer inversen Perspektiven-Transformationm bekannt.

Es ist eine Aufgabe der vorliegenden Erfindung, ein zuverlässiges Verfahren zum Erkennen eines Zielobjekts mittels einer Kamera anzugeben.

Diese Aufgabe wird durch ein Verfahren gemäß Patentanspruch 1 gelöst, bei dem erfindungsgemäß aus den Bildern eine Sichtlinieninformation des potenziellen Zielobjekts in Bezug zu einer als bekannt angenommenen Topografie bestimmt wird und anhand der Sichtlinieninformation das Zielobjekt als solches erkannt wird.

Die Erfindung geht von der Überlegung aus, dass die meisten Störsignaturen in Infrarotbildern von einer Topografie stammen, also von einer Oberfläche, wie einer Landschaftsoberfläche, einer Wolkenoberfläche oder einer Eisoberfläche, insbesondere von stationären zu einer Topografie gehörigen Objekten. Ein Zielobjekt, das sich relativ zu dieser Topografie bzw. zu einem oder mehreren stationären Objekten der Topograpfie bewegt, verursacht eine Wärmesignatur, die sich in mehreren Bildern relativ zu den Störsignaturen bewegt.

Hierbei kann die Kamera ruhen oder selbst relativ zur Topografie bewegt werden. Ruht die Kamera, so ist ein Zielobjekt relativ leicht zu erkennen, da es sich als einziges durch die Bilder hindurch bewegt. Die Sichtlinieninformation eines Objekts in der Topografie kann auf Null gesetzt werden, sofern es sich um eine Bewegung, wie eine Sichtliniendrehrate, oder Beschleunigung handelt.

Schwieriger wird es jedoch, wenn die Kamera relativ zur Topografie bewegt wird. Der Ort des potenziellen Zielobjekts bewegt sich durch die Bilder, unabhängig davon, ob es ein stationäres Störobjekt oder ein bewegtes Fahrzeug ist. Ist die Topografie oder die Bewegung der Kamera zur Topografie komplex, so sind die Bewegungen der Störsignaturen ebenfalls komplex und zudem nicht gleich zueinander, sodass eine Trennung eines Zielobjekts von einer Störsignatur nicht einfach zu bewerkstelligen ist. Bewegt sich ein Flugkörper mit der Kamera beispielsweise in komplexen Bahnen über eine heiße, bergige Landschaft, so bewegt sich die gesamte Landschaft als Topografie relativ zum Flugkörper, und damit bewegen sich auch die Störsignaturen in nicht vorhersagbaren Bahnen - bei nicht bekannter Topografie - durch die Bilder.

Ist allerdings die Topografie bekannt, so können die Bahnen der Störsignaturen in ein Verhältnis zueinander gesetzt werden, da sich die Topografie als Ganzes relativ zum Flugkörper beziehungsweise zur Kamera bewegt. Erst der Bezug von beispielsweise der Bewegung eines Fahrzeugs relativ zur Topografie kann das Zielobjekt als solches erkennbar machen. Es kann die Bewegung der Topografie abgezogen beziehungsweise als Vergleichsbewegung herangezogen werden. Bewegt sich ein Fahrzeug relativ zu dieser Topografie, so weicht dessen Sichtlinieninformation von denjenigen Sichtlinieninformationen ab, die innerhalb dieser topografischen Gesamtheit liegen und das Fahrzeug beziehungsweise das Zielobjekt kann als solches erkannt werden.

Es werden insofern zunächst ein oder mehrere Zielobjekte aus zumindest einem der Bilder als potenzielle Zielobjekte bestimmt. Im Folgenden wird vereinfachend von nur einem potenziellen Zielobjekt ausgegangen. Die Bestimmung des potenziellen Zielobjekts kann mittels bildverarbeitender Methoden geschehen, wobei zu diesem Zeitpunkt noch nicht bekannt sein muss, ob es sich um ein gewünschtes Zielobjekt handelt, hier ein Fahrzeug, oder um eine Störsignatur, also ein unerwünschtes Topografieobjekt, wie beispielsweise einen stark erhitzten Felsen oder eine Spiegelung auf Eis. Nun wird aus einem oder mehreren der Bilder eine Sichtlinieninformation des potenziellen Zielobjekts ermittelt. Die Sichtlinieninformation kann in Bezug zur als bekannt angenommenen Topografie gesetzt werden. Je nach Sichtlinieninformation in Bezug zur Topografie kann nun das potenzielle Zielobjekt als wahres Zielobjekt, also als Zielobjekt als solches, erkannt werden.

Die Sichtlinieninformation kann eine Sichtlinienrichtung von der Kamera zum potenziellen Zielobjekt sein, ein Ort der Sichtlinie auf beziehungsweise innerhalb der Topografie, eine Sichtliniendrehrate und/oder eine Sichtliniendrehbeschleunigung. Die Sichtlinieninformation kann aus einem oder mehreren der aufgenommenen Bilder bestimmt werden. Ist die Sichtlinieninformation ein Kreuzungspunkt beziehungsweise Schnittpunkt der Sichtlinie mit der Topografie, so kann die Sichtlinieninformation aus einem einzigen Bild ermittelt werden. Ist die Sichtlinieninformation hingegen eine Sichtliniendrehrate oder eine Sichtliniendrehbeschleunigung, so wird sie zweckmäßigerweise aus zwei oder mehr Bildern ermittelt.

Das Zielobjekt ist ein Fahrzeug auf dem Land, auf dem Wasser oder in der Luft, worunter auch Flugkörper aller Art verstanden werden können. Das potenzielle Zielobjekt wird zweckmäßigerweise mittels bildverarbeitender Verfahren aus einem oder mehreren Bildern ermittelt. Die Bilder sind zweckmäßigerweise Infrarotbilder und die Kamera ist eine Infrarotkamera. Der Bezug des potenziellen Zielobjekts zur Topografie kann eine Bewegung des potenziellen Zielobjekts relativ zur Topografie, der Schnittpunkt einer Sichtlinie mit der Topografie und/oder die Bewegung eines Schnittpunkts der Sichtlinie durch die Topografie sein.

Die Kamera kann ruhend zur Topografie sein. Alternativ ist sie jedoch zur Topografie bewegt, beispielsweise in einem fliegenden Luftfahrzeug. Sie kann ferner verschwenkbar sein, zweckmäßigerweise sowohl zur Topografie als auch zu einer Fahrzeugachse, wie einer Flugkörperachse.

Wird das potenzielle Zielobjekt als Zielobjekt als solches erkannt, kann es beispielsweise verfolgt werden, zum Beispiel mit der Kamera oder mit dem Flug eines Flugkörpers beziehungsweise Luftfahrzeugs. Wird erkannt, dass das potenzielle Zielobjekt doch kein Zielobjekt ist, so kann es als Zielobjekt verworfen werden.

Gemäß der Erfindung ist die Sichtlinieninformation der Schnittpunkt der Sichtlinie der Kamera zum potenziellen Zielobjekt mit der Topografie. Obwohl die Entfernung zwischen der Kamera und dem potenziellen Zielobjekt üblicherweise nicht bekannt ist, kann dem potenziellen Zielobjekt mit dem Schnittpunkt ein fiktiver Aufenthaltsort auf der Topografie zugewiesen werden oder es wird ein fiktives Objekt als auf dem Schnittpunkt liegendes weiteres Objekt definiert. Im Folgenden wird der Schnittpunkt als fiktives Objekt gesehen und dessen Bewegung verfolgt, wobei zur Klarheit der Begriffe vom Schnittpunkt anstelle eines Objekts die Rede sein wird.

In Abhängigkeit von einer Bewegung des Schnittpunkts von einem Bild zu einem anderen Bild wird entschieden, ob das potenzielle Zielobjekt verworfen oder als Zielobjekt erkannt und beispielsweise verfolgt wird. Hierzu kann die Bewegung des Schnittpunkts mit einer anderen Sichtlinieninformation verglichen werden. Dabei werden die Bewegungen des Schnittpunkts und des potenziellen Zielobjekts miteinander verglichen, oder es werden die Sichtlinieninformationen des Schnittpunkts und des potenziellen Zielobjekts miteinander verglichen, beispielsweise deren Sichtliniendrehraten.

Die Topografie kann eine Erdoberfläche, eine Gletscheroberfläche, Wasseroberfläche oder eine andere Topografie sein, wobei sogar eine Wolkenoberfläche in Betracht kommt, wenn Wolken überflogen werden und deren Position und Form bekannt ist. Welche Topografie verwendet wird, ist im Prinzip gleichgültig, solange die Topografie zumindest ansatzweise bekannt ist. Ist die Topografie beispielsweise eine Wolkenoberfläche, über die ein Flugkörper mit der Kamera fliegt, so kann ein zwischen der Kamera und der Wolkenoberfläche fliegendes Luftfahrzeug durch das erfindungsgemäße Verfahren zuverlässig erkannt werden, auch wenn eine Vielzahl von Sonnenreflexen Störsignaturen in den Bildern erzeugen.

Vorteilhafterweise ist die Topografie ein Geländemodell. Die Topografie ist insofern eine Landschaftstopografie, zweckmäßigerweise diejenige der von der Kamera abgebildeten Landschaft. Die Topografie ist zweckmäßigerweise aus geografischen beziehungsweise kartografischen Daten bekannt, die in einer Einheit, die mit der Kamera signaltechnisch verbunden ist, gespeichert oder durch diese abrufbar ist.

Möglich ist auch, dass die Topografie aus Sensordaten ermittelt wird, wenn sie nicht von vorne herein bekannt ist, beispielsweise wenn aus einer Bewegung einer Vielzahl von Objekten durch die Bilder die Topografie aus den Bewegungen errechnet wird. Ist die Eigenbewegung der Kamera bekannt, beispielsweise ihre Bewegung in geodätischen Koordinaten, so kann aus der Bewegung einer Vielzahl von Objekten, die auf der Topografie liegend definiert werden, die Topografie an sich berechnet werden.

Zur Erleichterung der Rechenvorgänge ist es sinnvoll, dass die Sichtlinieninformation in geostationären Koordinaten bestimmt wird, beispielsweise in geodätischen Koordinaten. Ist die Kamera eine bewegte Kamera, so kann ein kameraeigenes Koordinatensystem in ein geostationäres Koordinatensystem umgerechnet werden.

In einer Ausführungsvariante, die nicht in den beanspruchten Schutzbereich fällt, ist die Sichtlinieninformation der Schnittpunkt der Sichtlinie der Kamera zum potenziellen Zielobjekt mit der Topografie. Wird nun aus zwei Bildern jeweils der Schnittpunkt der Sichtlinie zum gleichen Zielobjekt bestimmt, so kann berechnet werden, ob die beiden Schnittpunkte identisch zueinander sind oder voneinander abweichen. Weichen sie voneinander ab, so wandert der Schnittpunkt der Sichtlinie mit der Topografie von einem Bild zum nächsten durch die Topografie. Das Zielobjekt bewegt sich daher durch oder über der Topografie und kann hierdurch als solches erkannt werden. Allgemein gesprochen kann in Abhängigkeit der beiden Schnittpunkte entschieden werden, ob das potenzielle Zielobjekt verworfen oder als Zielobjekt als solches erkannt wird.

Ist die Kamera eine bewegte Kamera, so kann eine bekannte Relativbewegung der Kamera über die Topografie zur Ermittlung der Sichtlinieninformation verwendet werden. Durch die bekannte Relativbewegung der Kamera über die Topografie kann die Bewegung der Abbildung der Topografie durch die Bilder berechnet werden. Weicht die Bewegung des potenziellen Zielobjekts von der Topografiebewegung ab, kann es als solches erkannt werden. Oder allgemein gesprochen kann die Sichtlinieninformation zum Zielobjekt aus der Bewegung der Zielobjektabbildung durch mehrere Bilder bestimmt werden.

In einer Ausführungsform der Erfindung ist die Sichtlinieninformation eine Sichtliniendrehrate. Die Sichtliniendrehrate wird aus einer berechneten Bewegung eines Schnittspunkts der Sichtlinie der Kamera zum potenziellen Zielobjekt bestimmt wird und die Berechnung erfolgt unter Verwendung einer bekannten Relativbewegung der Kamera über die Topografie. Aus der bekannten Relativbewegung kann die Sichtliniendrehrate eines in der Topografie liegenden fiktiven Objekts bestimmt werden. Weicht die Sichtliniendrehrate eines potenziellen Zielobjekts durch die Bilder hiervon ab, kann es als solches erkannt werden.

Die Sichtliniendrehrate eines in der Topografie liegenden Punkts beziehungsweise fiktiven Objekts wird aus der Lage des potenziellen Zielobjekts und der Eigenbewegung der Kamera relativ zur Topografie aus einem einzigen Bild ermittelt. Wird das in dem Bild sichtbare potenzielle Zielobjekt als in der Topografie liegend bestimmt, beziehungsweise der Ort in der Topografie wird gewählt, der im Schnittpunkt der Sichtlinie mit der Topografie liegt, so kann aus der bekannten Relativbewegung der Kamera über die Topografie die Sichtliniendrehrate dieses Orts bestimmt werden. Zum zuverlässigen Erkennen des Zielobjekts ist werden zwei Sichtlinieninformationen bestimmt. Eine der Sichtlinieninformationen kann aus der Lage des potenziellen Zielobjekts in zwei Bildern ermittelt werden, beispielsweise indem die Sichtliniendrehrate des potenziellen Zielobjekts von einem Bild zum anderen bestimmt wird. Die andere Sichtlinieninformation kann aus einer berechneten Bewegung eines Schnittpunkts der Sichtlinie der Kamera zum potenziellen Zielobjekt mit der Topografie bestimmt werden. Beispielsweise wird die Sichtliniendrehrate des hinter dem potenziellen Zielobjekt liegenden Landschaftspunkts aus der Eigenbewegung der Kamera ermittelt. Das Zielobjekt kann nun als solches erkannt werden, wenn die beiden Sichtlinieninformationen, im obigen Beispiel die beiden Sichtliniendrehraten, um mehr als vorgegeben voneinander abweichen.

In Bezug auf die Sichtliniendrehraten formuliert, ist es insofern vorteilhaft, wenn die Sichtliniendrehrate des potenziellen Zielobjekts aus zwei Bildern ermittelt wird und die Sichtliniendrehrate eines Schnittspunkts der Sichtlinie mit der Topografie bestimmt wird und die beiden Sichtliniendrehraten verglichen werden. Wenn diese um mehr als vorgegeben voneinander abweichen, kann das potenzielle Zielobjekt als ein Zielobjekt als solches erkannt werden beziehungsweise kategorisiert werden.

In einer weiteren Ausführungsform der Erfindung ist die Sichtlinieninformationen eine Sichtliniendrehbeschleunigung der Sichtlinie von der Kamera zum potenziellen Zielobjekt von einem Bild zu insbesondere zumindest zwei später aufgenommenen Bildern. Analog zur obigen Beschreibung kann das Zielobjekt als solches erkannt werden, wenn die Sichtliniendrehbeschleunigungen mehr als vorgegeben voneinander abweichen.

Die Erfindung ist außerdem gerichtet auf einen Lenkflugkörper gemäß Patentanspruch 5 mit einem Sucher enthaltend eine Kamera und eine Steuereinheit, die dazu eingerichtet ist, die Aufnahmen der Kamera zu steuern, die aufgenommenen Bilder mittels eines Bildverarbeitungsprogramms auszuwerten und aus zumindest einem Bild ein Objekt als potenzielles Zielobjekt zu bestimmen. Um das Zielobjekt auch in Bildern mit vielen Störsignaturen zu erkennen, ist die Steuereinheit erfindungsgemäß dazu vorbereitet, aus den Bildern eine Sichtlinieninformation des potenziellen Zielobjekts in Bezug zu einer als bekannt angenommenen Topografie zu bestimmen und anhand der Sichtlinieninformation das Zielobjekt als solches zu erkennen.

Die bisher gegebene Beschreibung vorteilhafter Ausgestaltungen der Erfindung enthält zahlreiche Merkmale, die teilweise in einigen abhängigen Ansprüchen zu mehreren zusammengefasst wiedergegeben sind. Die Merkmale können jedoch zweckmäßigerweise auch einzeln betrachtet und zu sinnvollen weiteren Kombinationen zusammengefasst werden, insbesondere bei Rückbezügen von Ansprüchen, sodass ein einzelnes Merkmal eines abhängigen Anspruchs mit einem einzelnen, mehreren oder allen Merkmalen eines anderen abhängigen Anspruchs kombinierbar ist. Außerdem sind diese Merkmale jeweils einzeln und in beliebiger geeigneter Kombination sowohl mit dem erfindungsgemäßen Verfahren als auch mit der erfindungsgemäßen Vorrichtung gemäß den unabhängigen Ansprüchen kombinierbar. So sind Verfahrensmerkmale auch als Eigenschaften der entsprechenden Vorrichtungseinheit gegenständlich formuliert zu sehen und funktionale Vorrichtungsmerkmale auch als entsprechende Verfahrensmerkmale.

Die oben beschriebenen Eigenschaften, Merkmale und Vorteile dieser Erfindung sowie die Art und Weise, wie diese erreicht werden, werden klarer und deutlicher verständlich in Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden.

Es zeigen:
- FIG 1: einen Lenkflugkörper mit einer Kamera, die mehrere Objekte aufnimmt,
- FIG 2: der Lenkflugkörper zu einem späteren Zeitpunkt, zu dem ein späteres Bild der Objekte aufgenommen wird und
- FIG 3: der Lenkflugkörper mit der Kamera zu einem späteren Zeitpunkt mit Blick auf ein Objekt.

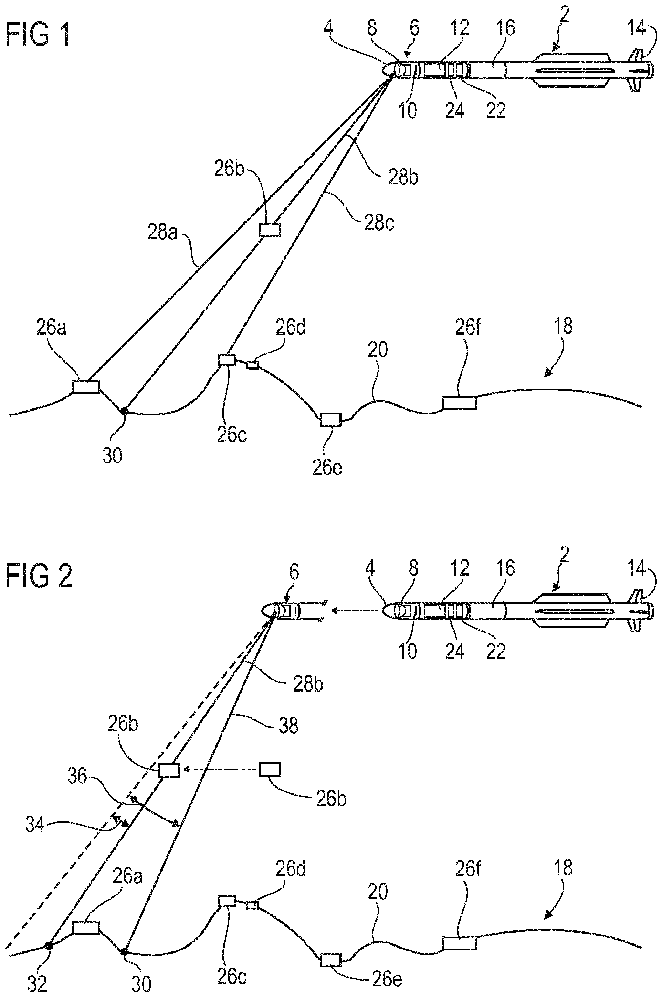

FIG 1 zeigt einen Lenkflugkörper 2 mit einem Sucher 4, der eine Kamera 6 mit einer Infrarotoptik 8 und einem Infrarotdetektor 10 umfasst. Mit der Kamera 6 verbunden ist eine Steuereinheit 12 zum Auswerten der von der Kamera 6 aufgenommenen Infrarotbilder und zum Ableiten von Lenkkommandos aus den Auswertungsergebnissen, mit denen Lenkflügel 14 angesteuert werden. Hierdurch kann der Lenkflugkörper 2 in Richtung zu einem Ziel gelenkt werden und einen Wirkkörper 16 dort zum Einsatz bringen.

Der Lenkflugkörper 2 fliegt über eine Landschaft 18, deren Topografie 20 in einer signaltechnisch mit der Steuereinheit 12 verbundenen Datenbank 22 abgespeichert ist. Die Topografie 20 ist ein Modell der Landschaft 18. Über ein Navigationssystem zur Bestimmung von Position und Lage 24 erhält die Steuereinheit 12 regelmäßig Informationen über den eigenen Standort, die eigene Fluggeschwindigkeit und die Flugrichtung und kann so die aktuelle Position des Lenkflugkörpers 2 relativ zur abgespeicherten Topografie 20 ermitteln. Das Navigationssystem 24 kann einen GNSS-Empfänger umfassen.

Im Verlauf des Flugs des Lenkflugkörpers 2 über die Landschaft 18 nimmt die Kamera 6 mehrere Infrarotbilder von der Landschaft 18 auf. Die Steuereinheit 12 wertet diese mithilfe einer Bildverarbeitungssoftware aus und erkennt aus beispielsweise einem der Bilder mehrere potenzielle Zielobjekte 26a-26f, die jeweils ein Fahrzeug darstellen könnten. Hierbei ist jedoch zunächst unklar, ob die Zielobjekte 26a-26f tatsächlich Fahrzeuge darstellen oder beispielsweise stark Wärme abstrahlende Geländebereiche, wie einen erhitzten Felsen oder einen Sonnenlicht reflektierenden Gletscherpunkt. Um zu ermitteln, ob eines oder mehrere der potenziellen Zielobjekte 26a-f eine Abbildung eines Fahrzeugs darstellt, kann nun der Lenkflugkörper 2 beziehungsweise die Steuereinheit 12 eines oder mehrere der folgenden Verfahren durchführen.

In FIG 1 sind beispielhaft drei Sichtlinien 28a-c von der Kamera 6 zu drei der potenziellen Zielobjekte 26a-c dargestellt. Die Steuereinheit 12 kann nun eines oder mehrere dieser Zielobjekte 26a-c auswählen um zu prüfen, ob es sich hierbei um eine Abbildung eines Fahrzeugs und damit um ein Zielobjekt 26a-c als solches handelt. Im Folgenden wählt die Steuereinheit 12 beispielhaft das potenzielle Zielobjekt 26b zur Untersuchung aus.

Die Steuereinheit 12 ermittelt eine Sichtlinieninformation zum potenziellen Zielobjekt 26b. Diese Sichtlinieninformation ist in dem Ausführungsbeispiel aus FIG 1 der Schnittpunkt 30 der Sichtlinie 28b mit der Topografie 20. Um diesen Schnittpunkt 30 zu ermitteln, bestimmt die Steuereinheit 12 die Richtung der Sichtlinie 28b von der Kamera 6 zum Zielobjekt 26b in geodätischen Koordinaten. Um dies zu erreichen, wird zunächst die Lage des Objekts 26b im aufgenommenen Bild bestimmt. Hiermit und der bekannten Ausrichtung der Kamera 6 relativ zur Flugkörperachse kann die Richtung der Sichtlinie 28b relativ zur Flugkörperachse bestimmt werden. Da die Flugrichtung und die Position des Lenkflugkörpers 2 ebenfalls bekannt sind, kann die Richtung der Sichtlinie 28b vom flugkörpereigenen Koordinatensystem in das geodätische Koordinatensystem umgerechnet werden. Durch Schnittpunktbildung der Sichtlinie 28b mit der Topografie 20 kann nun der Schnittpunkt 30 bestimmt werden. Während des Flugs des Lenkflugkörpers 2 nimmt die Kamera 6 mehrere Bilder vom potenziellen Zielobjekt 26b auf. Die Aufnahmezeitpunkte liegen zeitlich hintereinander, sodass sie von verschiedenen Positionen der bewegten Kamera 6 relativ zur Topografie 20 aufgenommen werden. Dies ist beispielhaft anhand der Darstellung aus FIG 2 gezeigt.

FIG 2 zeigt den Lenkflugkörper 2 zum gleichen Zeitpunkt wie in FIG 1 und zusätzlich zu einem späteren Zeitpunkt, wobei hierfür nur der vordere Teil des Lenkflugkörpers 2 angedeutet ist. Vom vorhergehenden zum späteren Zeitpunkt bewegt sich der Lenkflugkörper 2 von einer vorhergehenden in eine spätere Position, die durch den Pfeil am Lenkflugkörper 2 in FIG 2 angedeutet ist. Während dieser Zeit hat sich auch das potenzielle Zielobjekt 26b relativ zur Landschaft 18 fortbewegt, wie durch den Pfeil zwischen den Darstellungen des Zielobjekts 26b in FIG 2 dargestellt ist. In dem später aufgenommenen Bild taucht das Zielobjekt 26b an einem neuen Ort der Abbildung der Landschaft 18 auf, wie durch den Schnittpunkt 32 in FIG 2 angedeutet ist.

Es könnte nun angenommen werden, dass das potenzielle Zielobjekt 26b bereits aus dieser Relativbewegung durch die Abbildung der Landschaft 18 als solches erkannt werden könnte. Dies ist jedoch nicht sehr zuverlässig, da sich die Abbildungen der potenziellen Zielobjekte 26a-f während des Flugs des Lenkflugkörpers 2 sehr stark zueinander verändern können, insbesondere wenn der Lenkflugkörper 2 sehr dicht oberhalb einer bergigen Landschaft 18 oder auf die Landschaft 18 zu fliegt. Alle potenziellen Zielobjekte 26a-f bewegen sich in den Bildern unvorhersagbar zueinander, sodass aus deren Relativbewegung nicht zuverlässig ermittelt werden kann, welches der potenziellen Zielobjekte 26a-f ein Fahrzeug darstellen könnte.

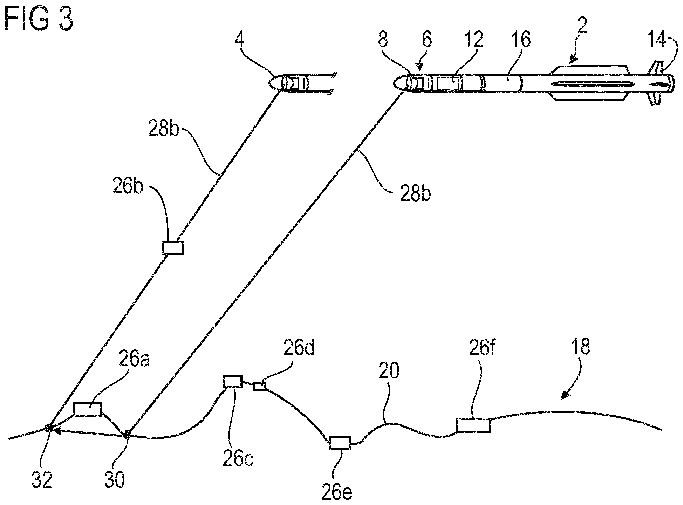

Um diese Unsicherheit zu umgehen, berechnet die Steuereinheit 12 aus der bekannten Sichtlinie 28b und der bekannten Topografie 20 den Schnittpunkt 32 der Sichtlinie 28b mit der Topografie 20. Es liegen nun mit den beiden Schnittpunkten 30, 32 zwei verschiedene Sichtlinieninformationen des potenziellen Zielobjekts 26b aus zwei nacheinander aufgenommenen Infrarotbildern vor. Zum Erkennen des potenziellen Zielobjekts 26b als Zielobjekt 26b als solches bestehen nun mehrere Möglichkeiten. Eine davon, die nicht in den beanspruchen Schutzbereich fällt, ist im Folgenden anhand von FIG 3 erläutert.

FIG 3 zeigt den Flugkörper 2 zu den gleichen beiden Zeitpunkten wie zu FIG 2 beschrieben. Aus den beiden Schnittpunkten 30, 32 kann die Steuereinheit 12 nun berechnen, ob sich der Schnittpunkt 30 durch die Topografie 20 bewegt hat. Wie aus FIG 3 sichtbar, ist dies durchaus der Fall, da der Schnittpunkt 32 einen deutlichen Abstand vom Schnittpunkt 30 innerhalb der Topografie 20 aufweist. Ist dieser Abstand größer als ein vorgegebener maximaler Abstandswert, so wird das Zielobjekt 26b als ein Zielobjekt 26b als solches angesehen. Ist ein Zielobjekt 26b als solches erkannt, so kann die Steuereinheit 12 den Lenkflugkörper 2 so lenken, dass der Lenkflugkörper 2 das Zielobjekt 26b anfliegt, um es beispielsweise zu treffen oder in dessen Nähe seinen Wirkkörper 16 zu zünden.

Ein weiteres Verfahren wird anhand der Darstellung aus FIG 2 erläutert. Hierfür ist die Berechnung des zweiten Schnittpunkts 32 nicht notwendig. Es wird die Sichtliniendrehrate 34 der Sichtlinie 28b zwischen den beiden Zeiträumen bestimmt. Zur Verdeutlichung ist in FIG 2 die Richtung der ursprünglichen Sichtlinie 28b, wie sie auch in FIG 3 mit der rechten Sichtlinie 28b dargestellt ist, in FIG 2 gestrichelt gezeigt. Zum späteren Zeitpunkt hat sich diese Sichtlinie 28b gegenüber der gestrichelten Sichtlinie verändert, wie in FIG 2 zu sehen ist. Diese Richtungsveränderung in Abhängigkeit von der Zeit zwischen den beiden Aufnahmezeitpunkten der beiden Bilder ist die Sichtliniendrehrate 34, die in FIG 2 anhand des kleinen Doppelpfeils dargestellt ist.

Diese Sichtliniendrehrate 34 wird nun mit der Sichtliniendrehrate 36 der Sichtlinie 28b von der Kamera 6 zum Schnittpunkt 30 verglichen. Hierbei wird die Richtung der Sichtlinie 28b von der Kamera 6 zum Schnittpunkt 30 zum späteren Zeitpunkt nicht aus dem späteren Bild ermittelt, sondern rechnerisch aus der Eigenbewegung des Lenkflugkörpers 2 beziehungsweise der Kamera 6 über die Topografie 20 bestimmt. Da diese Eigenbewegung beziehungsweise Relativbewegung bekannt ist, berechnet die Steuereinheit 12 aus dem bekannten späteren Zeitpunkt die Richtung, in der der Schnittpunkt 30, der aus dem Bild zum früheren Zeitpunkt ermittelt wurde, zum späteren Zeitpunkt liegt. Diese Richtung 38 ist in FIG 2 dargestellt und stellt im strengeren Sinne keine Sichtlinie dar, sondern ist eine errechnete Richtung 38 ausgehend von der Kamera 6. Der Winkel zwischen der Sichtlinie 28b des ersten Zeitpunkts, die in FIG 2 gestrichelt dargestellt ist, zur Richtung 38 kann nun durch die Zeitspanne zwischen den beiden Aufnahmezeitpunkten dividiert werden und bildet dann die fiktive Sichtliniendrehrate 36 des Schnittpunkts 30. Weichen die beiden Sichtliniendrehraten 34, 36 mehr als einen vorgegebenen Wert voneinander ab, so kann das potenzielle Zielobjekt 26b erkannt werden als ein Zielobjekt 26b als solches.

Analog zum Verfahren der Sichtliniendrehrate kann auch jeweils eine Sichtlinienbeschleunigung ermittelt werden, also die zweite Ableitung der Sichtlinienrichtung über die Zeit. Anhand dieser beiden Beschleunigungswerte kann das Zielobjekt 26 als solches erkannt werden, nämlich wenn die beiden Beschleunigungswerte um mehr als einen vorgegebenen Wert voneinander abweichen. Wie auch die Sichtliniendrehraten 34, 36 können die entsprechenden Sichtlinienbeschleunigungen jeweils als Sichtlinieninformation zur Bestimmung des Zielobjekts 26b als solches verwendet werden.

Auch ist die Verwendung der Sichtlinienrichtungen analog zu den obigen Sichtliniendrehraten oder Sichtliniendrehbeschleunigungsraten möglich. Die beiden Sichtlinienrichtungen der Sichtlinien 28b, 38 werden verglichen und das potenzielle Zielobjekt 26b wird als Zielobjekt als solches erkannt, wenn die beiden Richtungen 28b, 38 um mehr als einen vorgegebenen Wert voneinander abweichen. Hierbei muss der vorgegebene Wert, wie auch im Vorangegangenen, kein Absolutwert sein, sondern kann von einem oder mehreren Parametern abhängen, wie von der Bewegungsgeschwindigkeit der Kamera 6 relativ zur Topografie 20 und/oder von dem zeitlichen Aufnahmeabstand zwischen den Bildern.

### Bezugszeichenliste

- 2: Lenkflugkörper
- 4: Sucher
- 6: Kamera
- 8: Infrarotoptik
- 10: Infrarotdetektor
- 12: Steuereinheit
- 14: Lenkflügel
- 16: Wirkkörper
- 18: Landschaft
- 20: Topografie
- 22: Datenbank
- 24: Navigationssystem zur Bestimmung von Position und Lage
- 26: a-f Zielobjekt
- 28: a-c Sichtlinie
- 30: Schnittpunkt
- 32: Schnittpunkt
- 34: Sichtliniendrehrate
- 36: Sichtliniendrehrate
- 38: Richtung

## Patentansprüche

1. Verfahren zum Erkennen eines sich relativ zu einer Topographie (20) bewegenden Zielobjekts (26b) in Form eines Fahrzeuges auf dem Land, dem Wasser oder in der Luft mittels einer zur Topographie (20) ruhenden oder bewegten Kamera (6),
bei dem die Kamera (6) mehrere Bilder aufnimmt und aus zumindest einem der Bilder ein Objekt als potenzielles Zielobjekt (26a-f) bestimmt wird,
**dadurch gekennzeichnet,**
**dass** aus den Bildern eine Sichtlinieninformation des potenziellen Zielobjekts (26a-f) in Bezug zu der als bekannt angenommenen Topografie (20) bestimmt wird und anhand der Sichtlinieninformation
- entweder das potenziellen Zielobjekt (26a-f) als das sich relativ zu der Topographie (20) bewegende Zielobjekt (26b) erkannt wird
- oder das potenzielle Zielobjekt (26a-f) als ein in Bezug auf die Topographie (20) stationäres Störobjekt verworfen wird,
indem zwei Bilder nacheinander aufgenommen werden, und:
a) aus einem ersten Bild eine Sichtlinieninformation als der Schnittpunkt (30) der Sichtlinie der Kamera (6) zum potenziellen Zielobjekt (26a-f) mit der Topografie (20) bestimmt wird und eine Sichtlinieninformation als erste Sichtliniendrehrate (34) der Sichtlinie (28b) zwischen den beiden Zeitpunkten der Bildaufnahmen als Veränderung der Richtung der Sichtlinie (28b) in Abhängigkeit von der Zeit zwischen den beiden Zeitpunkten der Bildaufnahmen bestimmt wird, wobei die Sichtlinie (28b) jeweils von der Kamera (6) zum potentiellen Zielobjekt (26a-f) führt, und eine Sichtlinieninformation als zweite Sichtliniendrehrate (36) der Sichtlinie (28b, 38) von der Kamera (6) zum Schnittpunkt (30) entsprechend ermittelt wird, wobei die Richtung der Sichtlinie (38) von der Kamera (6) zum Schnittpunkt (30) zum späteren Zeitpunkt nicht aus dem späteren Bild ermittelt, sondern rechnerisch aus der Eigenbewegung der Kamera (6) über die Topografie (20) bestimmt wird und
- das potenzielle Zielobjekt (26a-f) als das sich relativ zu der Topographie (20) bewegende Zielobjekt (26b) erkannt wird, wenn die beiden Sichtliniendrehraten (34, 36) mehr als einen vorgegebenen Wert voneinander abweichen,
- und ansonsten das potenzielle Zielobjekt (26a-f) als das in Bezug auf die Topographie (20) stationäre Störobjekt verworfen wird,
oder
b) in der Variante gemäß a) anstelle der Sichtliniendrehraten (36,38) jeweils eine Sichtlinieninformation als Sichtlinienbeschleunigung als die zweite Ableitung der Sichtlinienrichtung über die Zeit ermittelt wird und anhand dieser beiden Beschleunigungswerte
- das potenzielle Zielobjekt (26a-f) als das sich relativ zu der Topographie (20) bewegende Zielobjekt (26b) erkannt wird, wenn die beiden Beschleunigungswerte um mehr als einen vorgegebenen Wert voneinander abweichen,
- und ansonsten das potenzielle Zielobjekt (26a-f) als das in Bezug auf die Topographie (20) stationäre Störobjekt verworfen wird.

2. Verfahren nach Anspruch 1,
**dadurch gekennzeichnet,**
**dass** die Topografie (20) ein Geländemodell ist.

3. Verfahren nach einem der vorhergehenden Ansprüche,
**dadurch gekennzeichnet,**
**dass** die Sichtlinieninformation in geodätischen Koordinaten bestimmt wird.

4. Verfahren nach einem der vorhergehenden Ansprüche,
**dadurch gekennzeichnet,**
**dass** in Variante a) eine bekannte Relativbewegung der Kamera (6) über die Topografie (20) zur Ermittlung der Sichtlinieninformation verwendet wird.

5. Lenkflugkörper (2) mit einem Sucher (4) enthaltend eine Kamera (6) und eine Steuereinheit (12), die dazu vorbereitet ist, die Aufnahmen der Kamera (6) zu steuern, die aufgenommenen Bilder mittels eines Bildverarbeitungsprogramms auszuwerten und aus zumindest einem Bild ein Objekt als potenzielles Zielobjekt (26b) zu bestimmen,
**dadurch gekennzeichnet,**
**dass** die Steuereinheit (12) dazu eingerichtet ist, das Verfahren nach einem der vorhergehenden Ansprüche durchzuführen.

## Claims

1. Method for identifying a target object (26b), in the form of a vehicle on land, water or in the air, that is moving relative to a topography (20) by means of a camera (6), which is at rest or moving in relation to the topography (20),
in which the camera (6) captures multiple images and an object from at least one of the images is determined as a potential target object (26a-f),
**characterized**
**in that** the images are used to determine line of sight information relating to the potential target object (26a-f) with respect to the topography (20), which is assumed to be known, and the line of sight information is taken as a basis for
- either identifying the potential target object (26a-f) as the target object (26b) that is moving relative to the topography (20)
- or rejecting the potential target object (26a-f) as an interference object that is stationary with respect to the topography (20)
by capturing two images in succession, and:
a) using a first image to determine line of sight information as the intersection (30) of the line of sight from the camera (6) to the potential target object (26a-f) with the topography (20) and determining line of sight information as a first line of sight rotation rate (34) of the line of sight (28b) between the two instants of the photographs as a change in the direction of the line of sight (28b) as a function of the time between the two instants of the photographs, the line of sight (28b) in each case leading from the camera (6) to the potential target object (26a-f), and accordingly ascertaining line of sight information as a second line of sight rotation rate (36) of the line of sight (28b, 38) from the camera (6) to the intersection (30), the direction of the line of sight (38) from the camera (6) to the intersection (30) at the later time not being ascertained from the later image, but rather being determined mathematically from the intrinsic movement of the camera (6) over the topography (20) and
- the potential target object (26a-f) being identified as the target object (26b) that is moving relative to the topography (20) if the two line of sight rotation rates (34, 36) deviate from each other by more than a predetermined value,
- and otherwise the potential target object (26a-f) being rejected as the interference object that is stationary with respect to the topography (20),
or
b) in the variant according to a), instead of the line of sight rotation rates (36, 38), ascertaining respective line of sight information as a line of sight acceleration as the second derivative of the line of sight direction over time and taking these two acceleration values as a basis for
- identifying the potential target object (26a-f) as the target object (26b) that is moving relative to the topography (20) if the two acceleration values deviate from each other by more than a predetermined value,
- and otherwise rejecting the potential target object (26a-f) as the interference object that is stationary with respect to the topography (20).

2. Method according to Claim 1,
**characterized**
**in that** the topography (20) is a terrain model.

3. Method according to either of the preceding claims,
**characterized**
**in that** the line of sight information is determined in geodetic coordinates.

4. Method according to either of the preceding claims,
**characterized**
**in that** in variant a) a known relative movement of the camera (6) over the topography (20) is used to determine the line of sight information.

5. Guided missile (2) comprising a seeker (4) containing a camera (6) and a control unit (12) that is prepared to control the capture by the camera (6), to evaluate the captured images by means of an image processing program and to determine from at least one image an object as a potential target object (26b),
**characterized**
**in that** the control unit (12) is configured to carry out the method according to one of the preceding claims.

## Revendications

1. Procédé de détection d'un objet cible (26b) se déplaçant par rapport à une topographie (20) sous la forme d'un véhicule automobile sur terre, sur l'eau ou dans les airs, au moyen d'une caméra (6) immobile ou en mouvement par rapport à la topographie (20),
la caméra (6) prenant plusieurs images et déterminant un objet comme étant objet cible potentiel (26a-f) à partir d'au moins une des images,
**caractérisé**
**en ce que**, à partir des images, une information de ligne de visée de l'objet cible potentiel (26a-f) est déterminée par rapport à la topographie (20) supposée connue et, en utilisant l'information de ligne de visée
- soit l'objet cible potentiel (26a-f) est reconnu comme étant l'objet cible (26b) se déplaçant par rapport à la topographie (20),
- soit l'objet cible potentiel (26a-f) est rejeté comme étant un objet interférent stationnaire par rapport à la topographie (20),
en prenant deux images l'une après l'autre, et :
a) à partir d'une première image, une information de ligne de visée est déterminée comme étant le point d'intersection (30) de la ligne de visée de la caméra (6) vers l'objet cible potentiel (26a-f) avec la topographie (20), et une information de ligne de visée est déterminée comme étant le premier taux de rotation (34) de la ligne de visée (28b) entre les deux moments des prises d'images comme étant la modification de la direction de la ligne de visée (28b) en fonction du temps entre les deux moments des prises d'images, la ligne de visée (28b) menant à chaque fois de la caméra (6) à l'objet cible potentiel (26a-f), et une information de ligne de visée étant déterminée en conséquence, en tant que deuxième taux de rotation (36) de la ligne de visée (28b, 38) allant de la caméra (6) à l'intersection (30), la direction de la ligne de visée (38) allant de la caméra (6) à l'intersection (30) n'étant pas déterminée ultérieurement à partir de l'image ultérieure, mais étant calculée à partir du mouvement propre de la caméra (6) sur la topographie (20), et
- l'objet cible potentiel (26a-f) est identifié comme étant l'objet cible (26b) se déplaçant par rapport à la topographie (20) si les deux taux de rotation des lignes de visée (34, 36) diffèrent l'un de l'autre de plus d'une valeur prédéterminée,
- et sinon, l'objet cible potentiel (26a-f) est rejeté comme étant l'objet interférent stationnaire par rapport à la topographie (20),
ou
b) dans la variante selon a), au lieu des taux de rotation de la ligne de visée (36, 38), une information de ligne de visée est déterminée à chaque fois comme étant l'accélération de la ligne de visée en tant que deuxième dérivée de la direction de la ligne de visée au cours du temps et sur la base de ces deux valeurs d'accélération,
- l'objet cible potentiel (26a-f) est identifié comme étant l'objet cible (26b) se déplaçant par rapport à la topographie (20) si les deux valeurs d'accélération diffèrent l'une de l'autre de plus d'une valeur prédéterminée,
- et sinon, l'objet cible potentiel (26a-f) est rejeté en tant qu'objet interférent stationnaire par rapport à la topographie (20).

2. Procédé selon la revendication 1,
**caractérisé**
**en ce que** la topographie (20) est un modèle de terrain.

3. Procédé selon l'une des revendications précédentes,
**caractérisé**
**en ce que** l'information de ligne de visée est déterminée en coordonnées géodésiques.

4. Procédé selon l'une des revendications précédentes,
**caractérisé**
**en ce que** dans la variante a), un mouvement relatif connu de la caméra (6) sur la topographie (20) est utilisé pour déterminer l'information de ligne de visée.

5. Missile guidé (2) avec un système de recherche (4) comprenant une caméra (6) et une unité de commande (12) qui est préparée pour commander les prises d'images de la caméra (6), pour évaluer les images enregistrées au moyen d'un programme de traitement d'images et, à partir d'au moins une image, pour déterminer un objet comme étant un objet cible potentiel (26b),
**caractérisé**
**en ce que** l'unité de commande (12) est conçue pour mettre en œuvre le procédé selon l'une des revendications précédentes.
